# EUROPEAN PATENT SPECIFICATION

(11) **EP 1 757 152 B1**
(45) Date of publication and mention of the grant of the patent: **26.05.2010**
(21) Application number: 05756599.6
(22) Date of filing: 13.06.2005
(51) Int. Cl.: H04W 36/30

(54) **A METHOD OF DETERMINING NEIGHBOUR CELL SELECTION**
VERFAHREN ZUR BESTIMMUNG DER NACHBARZELLENAUSWAHL
PROCEDE DE DETERMINATION DE SELECTION D'UNE CELLULE VOISINE

(30) Priority: 17.06.2004 GB 0413534; 05.11.2004 GB 0424510
(43) Date of publication of application: 28.02.2007
(73) Proprietor: Nokia Siemens Networks GmbH & Co. KG, 81541 München (DE)
(72) Inventor: CHAPMAN, Thomas Malcolm, Southampton Hampshire SO18 4RY (GB); RANDALL, David, Romsey Hampshire SO51 5SZ (GB)
(86) International application number: PCT/GB2005/002364
(87) International publication number: WO 2005/125254

(56) References cited:
- EP-A- 1 372 350
- US-A1- 2004 081 125

## Description

This invention relates to a method of determining neighbour cell selection for a mobile terminal in a broadcast/multicast.

The 3^{rd} generation project partnership (3GPP) universal mobile telecommunications system (UMTS) cellular radio system includes a capability for the broadcast or multicast of data to multiple user equipments (UEs). An example can be found in US 2004/0 081 125. To increase the reliability of the data transmission the UE is required to be able to receive transmissions from its primary or serving cell and also, if necessary, from one or more neighbour cells. The UE can then combine the signals that it receives from the plurality of cells to produce a single data stream that has a lower rate of data loss than would be obtained if decoding the primary cell alone. This combining of MBMS traffic channel (MTCH) transmissions within a cell group has been adopted for multimedia broadcast multicast service (MBMS) and the provision of neighbour cell information on MBMS control channel (MCCH) has been agreed.

However, as it is likely that, on any particular occasion, more neighbour cells will transmit data than the UE is able to receive, it is desirable for the UE to be able to select, from a number of neighbour cells offered, only those which most effectively improve the resulting single data stream.

In accordance with the present invention, a method of determining neighbour cell selection for a mobile terminal in a broadcast/multicast comprises deriving an estimate of cell quality for each neighbour cell; comparing the determined quality with a minimum acceptable quality; and choosing those neighbour cells having the highest quality from the acceptable offered neighbour cells, wherein a parameter of the difference between a common pilot channel (CPICH) transmit power and a secondary common control physical channel (S-CCPCH) transmit power is transmitted to the mobile terminal on a multimedia broadcast multicast service (MBMS) control channel, whereby the mobile terminal derives the estimate of cell quality.

The mobile terminal determines which, if any, of the neighbour cells will most enhance reliability of data transmission and chooses to accept additional transmissions from those, using a new parameter transmitted to the mobile terminal.

For the purpose of this application, reference to CPICH means primary CPICH, or P-CPICH. Sometimes there is a secondary CPICH available, but this would not always be present, so is not appropriate for carrying out the present invention.

The quality estimate may be the SIR (Signal to Interference ratio) of the MTCH. In one embodiment, the mobile terminal estimates the SIR on the CPICH and scales this ratio according to the transmitted parameter. Alternatively, the mobile terminal derives the estimate of cell quality from a combination of network power used to transmit a physical channel carrying the broadcast/multicast data stream; spreading factor; code puncturing limit and transmission path loss between the mobile terminal and the neighbour cell.

The parameter enables the terminal to make a measurement of CPICH signal to interference ratio (SIR), or power and adjust this value in order that it is relevant to the MTCH.

Preferably, the transmission path loss is estimated as the difference between a measured common pilot reference channel received power and a common pilot channel transmit power, scaled according to the parameter.

Preferably, the selected neighbour cells are synchronised with the serving cell such that their respective transmissions do not deviate in time more than the size of a window in a radio link control combining function.

Preferably, the maximum timing difference between any two cells in a cell group does not exceed a predetermined value.

Preferably, the mobile terminal only selects neighbour cells if the serving cell MBMS traffic channel quality fails a quality condition.

An example of a method of determining neighbour cell selection for a mobile terminal in a broadcast or multicast will now be described with reference to the accompanying drawings in which:

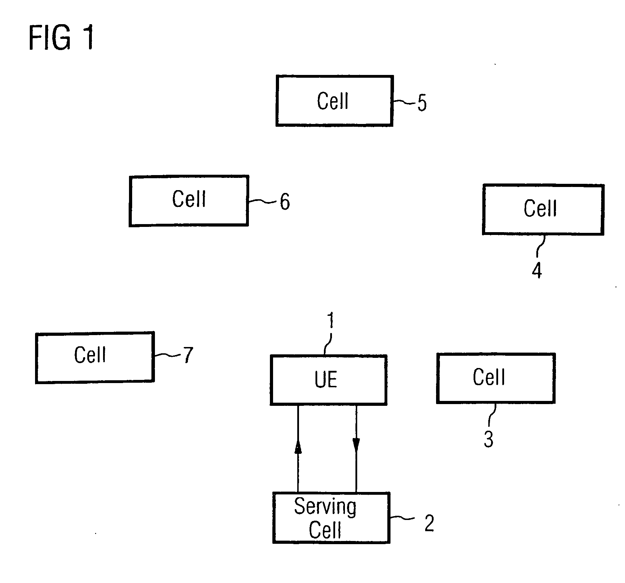

Figure 1 is a block diagram of a typical arrangement of a mobile terminal and a number of cells for which the method of the present invention is applied.

The example of Fig. 1 illustrates a UE 1 surrounded by a number of cells 2 to 7. Amongst these is a serving cell 2, through which the main communications to the UE occur. However, to increase the reliability as required by the 3GPP UMTS system, the UE also receives data from some neighbour cells 3 to 7. The use of neighbour cells may occur in all circumstances, or the UE may choose to select the neighbour cells, only if the UE's own serving cell fails a quality target.

In the first case, the UE always selects and uses neighbour cells, to within its capability. Selection of the best neighbour cell or cells is completed as soon as possible, and is performed taking into account the signalled parameter by which the CPICH to S-CCPCH power difference value is provided. Alternatively, the UE does not select neighbour cells unless the serving cell MTCH fails a quality condition. Based on conventional cell selection procedures, the UE periodically measures only the serving cell until the quality condition fails, after which all neighbour cells are assessed. If the network controls the quality condition, a threshold value is signalled as part of neighbour cell information on MCCH.

Assuming, for the purpose of this example, that the UE intends to use data from one or more neighbour cells, then the UE needs to choose the neighbour cells which will provide the most effective improvement, since the UE is limited in the number of cells which it is able to accept incoming data from, so the UE selects those which provide the highest estimated quality

The selection of the cells that provide the lowest data error rate is done by the UE estimating the quality of each cell from its knowledge of the power with which the network will transmit the physical channel that carries the CPICH and the power offset of the physical channel that carries the MBMS data stream (MBMS S-CCPCH). Additional parameters, such as the the spreading factor that will be used on the MBMS S-CCPCH, the code puncturing limit of the MBMS S-CCPCH and the transmission path loss between the UE and the neighbour cell can also be used. The UE is able to rank the cells in order of those likely to provide the highest quality S-CCPCH signal.

SIR can be estimated by the UE measuring the received SIR of the CPICH reference channel and scaling according to the CPICH transmit power to MBMS transmit power offset.

Transmission path loss can be estimated by the UE measuring the received power of the CPICH reference channel and subtracting the CPICH transmit power to MBMS transmit power offset. Thus, if the UE has available the value of CPICH Tx power - MBMS S-CCPCH Tx power for each cell, then the UE can estimate the relative quality of each of the neighbour cell transmissions and select those which are best. In practice, the MBMS S-CCPCH Tx power tends to be greater than the CPICH Tx power, so to maintain a positive result the network calculates and transmits the parameter as MBMS S-CCPCH Tx power - CPICH Tx power for each neighbour cell. One option is for these parameters to be transmitted with other neighbour cell information on the MBMS Control Charnel (MCCH).

Given that selective combining of MTCH transmissions made within cell groups forms part of MBMS operation, it can be expected that specified minimum UE capabilities will identify a minimum number of neighbour cells that a UE must be capable of receiving simultaneously at specified rates or transmission time interval (TTI) lengths,. Since generally this is likely to be less than the number of neighbour cells that are identified in the MCCH transmissions the UE has to determine a subset that it can receive. It is assumed that the UE always receives the MTCH transmission of its serving cell and that the neighbour cells will be a subset of the cells identified in system information block (SIB) 11/12.

A further improvement to the present invention is to adopt a default value of zero and apply a cell specific offset. Thus, in this case the parameter will be S-CCPCH Tx power - CPICH Tx power - cell specific offset = 0. This means that if a parameter is not signalled a value of zero can be assumed. If the offset is set to the most common value for S-CCPCH Tx power - CPICH Tx power amongst all neighbour cells, then this can be used to minimise the number of neighbour cells for which the parameter has to be signalled, thereby reducing the signalling overhead. In addition, the offset reduces the parameter dynamic range.

It is possible to use an offset because the UE only needs to select the best neighbour cells, i.e. to place them in rank order as referred to above. For each neighbour cell, i, only the value of ri = (S-CCPCHi Tx - P-CPICHi Tx - offset) + measured P-CPICHi nees to be formed to be able to place the neighbour cells in rank order and choose the best, since the offset is common to all neighbour cells and consequently does not affect their rank order.

Selecting which neighbour cells to receive is carried out autonomously in the UE with an assumption of two constraints. The first of these is that the UE should select only neighbour cells such that the timing offset between the serving and neighbour cells does not exceed a threshold.. The second assumption is that the neighbour cells should provide the best, or at least within a measure of the best, quality of all neighbour cells that are available. The quality measure may be based on SIR or block error rate (BLER) estimated from MBMS transmit power, spreading factor and code rate.

The timing offset requires UTRAN input, but the quality control can be completed either using rules specified by standards using parameters provided by the network, or using UE specific rules that are tested via performance testing. Synchronisation of the serving and all selected neighbour cells is such that their transmissions do not deviate in time by more than the size of the window that is used by the RLC selective combining function. To achieve this requirement the transmissions within a cell group are controlled so that the maximum timing difference between any two cells in a cell group does not exceed a known value. This maximum timing difference, translated into numbers of RLC protocol data units (PDUs), is transmitted on MCCH and used by the UE as the selective combining window size. Timing accuracy can then be excluded from any neighbour cell selection process. The maximum window size is defined by the minimum UE capability.

Other modes of operation are possible, such as identifying for each neighbour cell a maximum timing deviation and arranging for the UE to select only those cells that are within its capability to receive. This allows greater flexibility in UE capability and cell transmission timing, but such flexibility is not always necessary or desirable when the added complexity of such a mode is taken into account.

The UE autonomously selects the neighbour cells that it uses and this selection must meet the necessary quality requirements. The UE makes an initial selection whenever a bearer is established and whenever it performs cell reselection whilst receiving a point to multipoint (p-t-m) bearer. In each case there may be a delay whilst the UE makes measurements of neighbour cells and makes the selection and consequently there may be a period where it receives only the serving cell. In the case of cell reselection the delay may include the time taken to receive MCCH and possibly SIB 11/12.

Using conventional measurement practice for cell reselection for the neighbour cell selection, means that the UE completes measurements for all neighbour cells that are listed in MCCH before deciding on a correct choice. Alternatively, the UE can measure until a suitable cell is found, then accept that one only. If the UE can accept more than one neighbour cell, this process continues until the desired number have been accepted.

Where a UE is using neighbour cells then, from time to time, it is necessary to re-assess the appropriateness of the chosen neighbour cells, which can be done in a number of ways. One option is that the neighbour cells are replaced only if their quality falls below a given threshold. The UE periodically measures only the neighbour cells in use until the predetermined quality condition fails, after which an assessment of all cells is made. If the network controls the quality condition, a threshold value can be signalled as part of neighbour cell information on MCCH.

An alternative method is that all neighbour cells are assessed periodically and the best adopted for use. No control parameters are required by this method, but the minimum period between periodic updates is specified. Changing the cells from which transmissions are made should not disrupt operation of the RLC selective combining function, so it is not expected that there would be significant costs from changing neighbour cells.

Control over the way in which neighbour cells are selected/ re-selected could be set out as part of the standard or left to each service provider to determine. If the control formed part of the standard and specified rules for UE neighbour cell selection and reselection, then selection/ reselection trigger parameters may be included. In either case, relative S-CCPCH and CPICH Tx power information may be required from the UTRAN to allow the UE to compare cells e.g. if CPICH RSCP were to be used as a comparison measure.

## Claims

1. A method of determining neighbour cell selection for a mobile terminal in a broadcast/multicast comprises deriving an estimate of cell quality for each neighbour cell; comparing the determined quality with a minimum acceptable quality; and choosing those neighbour cells having the highest quality from the acceptable offered neighbour cells, wherein a parameter of the difference between a common pilot channel, abbreviated as CPICH, transmit power and a secondary common control physical channel, abbreviated as S-CCPCH, transmit power is transmitted to the mobile terminal on a multimedia broadcast multicast service, abbreviated as MBMS, control channel, whereby the mobile terminal derives the estimate of cell quality based on these parameters.

2. A method according to claim 1, wherein the mobile terminal estimates a signal to interference ratio, abbreviated as SIR, on the common pilot channel and scales this ratio according to the transmitted parameter.

3. A method according to claim 1, wherein the mobile terminal derives the estimate of cell quality from a combination of network power used to transmit a physical channel carrying the broadcast/multicast data stream, derived from the primary pilot physical channel power and the signalled parameter; spreading factor; code puncturing limit and transmission path loss between the mobile terminal and the neighbour cell.

4. A method according to claim 3, wherein the transmission path loss is estimated as the difference between a measured common pilot reference channel received power and a common pilot channel transmit power, scaled according to the parameter.

5. A method according to any preceding claim, wherein the selected neighbour cells are synchronised with the serving cell such that their respective transmissions do not deviate in time more than the size of a window in a radio link control combining function.

6. A method according to any preceding claim, wherein the maximum timing difference between any two cells in a cell group does not exceed a predetermined value.

7. A method according to any preceding claim, wherein the mobile terminal only selects neighbour cells if the serving cell MBMS traffic channel quality fails a quality condition.

## Patentansprüche

1. Ein Verfahren zur Bestimmung von Nachbarzellenauswahl für ein mobiles Endgerät in einer Rundsendung/Multicast-Sendung umfaßt Ableiten einer Schätzung der Zellengüte für jede Nachbarzelle; Vergleichen der bestimmten Güte mit einer minimal akzeptablen Güte; und Wählen der Nachbarzellen mit der höchsten Güte aus den akzeptablen angebotenen Nachbarzellen, wobei ein Parameter des Unterschieds zwischen der Sendeleistung eines gemeinsamen Pilotkanals abgekürzt als CPICH (Common Pilot Channel) und der Sendeleistung eines sekundären gemeinsamen physikalischen Steuerkanals S-CCPCH (Secondary Common Control Physical Channel) zum mobilen Endgerät auf einem abgekürzt als MBMS-Steuerkanal (Multimedia Broadcast Multicast Service) übertragen wird, wodurch das mobile Endgerät die Schätzung von Zellengüte auf Grundlage dieser Parameter ableitet.

2. Verfahren nach Anspruch 1, wobei das mobile Endgerät ein Signal-Interferenz-Verhältnis, abgekürzt als SIR (Signal to Interference Ratio) auf dem gemeinsamen Pilotkanal schätzt und dieses Verhältnis entsprechend dem übertragenen Parameter skaliert.

3. Verfahren nach Anspruch 1, wobei das mobile Endgerät die Schätzung von Zellengüte aus einer Kombination von zur Übertragung eines den Rundsende-/Multicast-Datenstrom tragenden physikalischen Kanals benutzten Netzleistung abgeleitet aus der primären physikalischen Pilotkanalleistung und dem signalisierten Parameter; Spreizfaktor; Code-Punktierungsgrenze und Übertragungsdämpfung zwischen dem mobilen Endgerät und der Nachbarzelle ableitet.

4. Verfahren nach Anspruch 3, wobei die Übertragungsdämpfung als die Differenz zwischen einer gemessenen Empfangsleistung des gemeinsamen Pilotreferenzkanals und einer Sendeleistung des gemeinsamen Pilotkanals skaliert entsprechend dem Parameter geschätzt wird.

5. Verfahren nach einem beliebigen vorhergehenden Anspruch, wobei die ausgewählten Nachbarzellen mit der versorgenden Zelle so synchronisiert sind, daß ihre jeweiligen Übertragungen zeitlich um nicht mehr als die Größe eines Fensters in einer Funkübertragungssteuerungs-Kombinationsfunktion abweichen.

6. Verfahren nach einem beliebigen vorhergehenden Anspruch, wobei die maximale Taktdifferenz zwischen zwei beliebigen Zellen in einer Zellengruppe nicht einen vorbestimmten Wert überschreitet.

7. Verfahren nach einem beliebigen vorhergehenden Anspruch, wobei das mobile Endgerät Nachbarzellen nur auswählt, wenn die Güte des MBMS-Nachrichtenkanals der versorgenden Zelle eine Gütebedingung nicht erfüllt.

## Revendications

1. Procédé de détermination d'une sélection de cellules voisines pour un terminal mobile dans une diffusion/multidiffusion comprenant l'obtention d'une estimation de qualité de cellules pour chaque cellule voisine ; la comparaison de la qualité déterminée avec une qualité minimum acceptable ; et le choix des cellules voisines ayant la qualité la plus haute parmi les cellules voisines proposées acceptables, dans lequel un paramètre de la différence entre une puissance de transmission de canal pilote commun, abrégé sous la forme CPICH, et une puissance de transmission de canal physique de contrôle commun secondaire, abrégé sous la forme S-CCPCH, est transmis au terminal mobile sur un canal de contrôle de service de diffusion/multidiffusion multimédia, abrégé sous la forme MBMS, d'où il résulte que le terminal mobile obtient l'estimation de qualité de cellules sur la base de ces paramètres.

2. Procédé selon la revendication 1, dans lequel le terminal mobile estime un rapport signal sur interférence, abrégé sous la forme SIR, sur le canal pilote commun et met ce rapport à l'échelle en fonction du paramètre transmis.

3. Procédé selon la revendication 1, dans lequel le terminal mobile obtient l'estimation de qualité de cellules à partir d'une combinaison d'une puissance réseau utilisée pour transmettre un canal physique transportant le flux de données de diffusion/multidiffusion, obtenue à partir de la puissance de canal physique pilote primaire et du paramètre signalisé ; d'un facteur d'étalement ; d'une limite de perforation de code et d'une perte de voie de transmission entre le terminal mobile et la cellule voisine.

4. Procédé selon la revendication 3, dans lequel la perte de voie de transmission est estimée comme la différence entre une puissance reçue de canal de référence pilote commun mesurée et une puissance de transmission de canal pilote commun, mise à l'échelle en fonction du paramètre.

5. Procédé selon une quelconque revendication précédente, dans lequel les cellules voisines sélectionnées sont synchronisées avec la cellule de desserte de telle sorte que leurs transmissions respectives ne dévient pas dans le temps de plus de la taille d'une fenêtre dans une fonction de combinaison de contrôle de liaison radio.

6. Procédé selon une quelconque revendication précédente, dans lequel la différence temporelle maximum entre deux cellules quelconques dans un groupe de cellules n'excède pas une valeur prédéterminée.

7. Procédé selon une quelconque revendication précédente, dans lequel le terminal mobile ne sélectionne des cellules voisines que si la qualité du canal de trafic du MBMS de la cellule de desserte ne satisfait pas à une condition de qualité.
